# FASCICULE DE BREVET EUROPEEN

(11) **EP 2 890 845 B1**
(45) Date de publication et mention de la délivrance du brevet: **12.12.2018**
(21) Numéro de dépôt: 13766599.8
(22) Date de dépôt: 29.08.2013
(51) Int. Cl.: C09D 7/61, C09D 7/40

(54) **COUCHE D'OPACIFICATION D'UN SUPPORT PAPIER**
TRÜBUNGSSCHICHT FÜR EIN PAPIERMEDIUM
OPACIFYING LAYER FOR A PAPER MEDIUM

(30) Priorité: 30.08.2012 FR 1258093
(43) Date de publication de la demande: 08.07.2015
(73) Titulaire: Institut Polytechnique de Grenoble, 38000 Grenoble (FR); Papeteries du Leman, 74500 Amphion-les-Bains (FR)
(72) Inventeur: BRAS, Julien, F-38000 Grenoble (FR); BELGACEM, Naceur, F-38320 Brie Et Angonnes (FR); BARDET, Raphael, F-74500 Amphion-les-Bains (FR); AGUT, Philippe, F-74500 Amphion-les-Bains (FR); DUMAS, Jocelyne, F-74500 Amphion les Bains (FR)
(74) Mandataire: Bronchart, Quentin
(86) Numéro de dépôt international: PCT/FR2013/051997
(87) Numéro de publication internationale: WO 2014/033409

(56) Documents cités:
- EP-A1- 1 323 674
- WO-A1-2010/112519
- WO-A1-2010/142845
- WO-A1-2010/142846
- WO-A2-2010/125247

## Description

### Domaine de l'invention

L'invention concerne une composition pigmentaire à base de microfibrilles de cellulose (MicroFibrillated Cellulose, ou MFC) et un procédé d'enduction de cette composition pigmentaire.

Dans de nombreux domaines, on cherche à déposer sur un support une couche d'un matériau conférant à ce support des caractéristiques particulières (aspect, imprimabilité, résistance...). Par souci de simplicité, les exemples donnés ci-après le seront essentiellement dans le domaine de la papeterie et dans le cas où on cherche à conférer à un papier un aspect opaque, notamment dans le cas où celui-ci doit être imprimé. Toutefois, il faut souligner, comme on le verra ci-après que l'invention n'est pas limitée à ce domaine et à cette application particulière.

### Exposé de l'art antérieur

Une première solution pour opacifier un papier consiste à introduire pendant la fabrication de ce papier des charges et des pigments dans le matelas fibreux constituant le papier. Ces éléments, se présentant sous forme sèche ou de poudres pré-dispersées en milieu aqueux, peuvent être ajoutés en amont ou en aval de la formation du matelas fibreux. Parmi les différentes charges et pigments utilisés, on peut mentionner des carbonates de calcium broyés ou précipités, du kaolin natif ou calciné, du talc, du dioxyde de titane (TiO₂).

Pour opacifier un support mince, le TiO₂ est le pigment le plus efficace parmi les pigments utilisés car il possède d'excellentes propriétés de diffusion de la lumière. En effet il possède un indice de réfraction élevé (2,55 à 2,70) par rapport aux autres charges.

Néanmoins, l'introduction de charges ou de pigments opacifiants dans une pâte à papier présente de nombreux inconvénients parmi lesquels on peut mentionner les suivants :
- détérioration des caractéristiques mécaniques (longueur de rupture, éclatement, déchirure et rigidité),
- mauvaise rétention des pigments par le matelas fibreux du papier, d'où il résulte un entraînement dans les eaux blanches c'est-à-dire les eaux d'égouttage recyclées,
- augmentation de la masse volumique,
- augmentation de la quantité d'additifs chimiques nécessaire pour le procédé de fabrication (agent de floculation, de rétention...) ou pour les propriétés finales du papier (collage, résistance à l'état sec ou humide...).

Pour les supports les plus légers (25-35 g/m2), la quantité nécessaire de dioxyde de titane (TiO₂) requise pour atteindre une opacité acceptable peut représenter jusqu'à 10 % (massique). Cependant, du fait de leur faible dimension et de leur densité élevée (3,9 à 4,2), les pigments de TiO₂ ont une très faible rétention pouvant atteindre moins de 50 % même en utilisant un système optimisé de récupération des eaux résiduaires.

De plus, le TiO₂ est un pigment très cher, les sources d'approvisionnement en titane sont limitées géographiquement, et les procédés d'extraction et de purification du titane sont polluants. La réduction de la consommation de TiO₂ présente un double intérêt, à la fois économique et environnemental.

Une deuxième solution pour réaliser une opacification consiste à déposer une couche supplémentaire sur au moins une face du papier. La couche supplémentaire est déposée à partir de sauces de couchage (un mélange en suspension aqueuse). Les sauces de couchage couramment utilisées sont des mélanges de liants tels que des latex (acrylique ou styrène-butadiène) ou des polymères hydrosolubles (amidon, CMC, PVA, caséine) et de charges pigmentaires minérales (carbonate de calcium broyé ou précipité, kaolin, talc, TiO₂) ou organiques. Certains adjuvants comme des dispersants, des azurants optiques, des antimousses, des insolubilisants, des lubrifiants, etc. peuvent être aussi ajoutés. Cela permet entre autres d'améliorer l'état de surface du papier, son opacité, son imprimabilité ou de lui conférer des propriétés additionnelles (barrière aux graisses, à l'eau...).

Dans le cas où on recherche une opacification et où la sauce de couchage contient du TiO₂, la quantité nécessaire de TiO₂ requise pour atteindre une opacité acceptable peut, ici encore, représenter jusqu'à 10 % (massique). Même alors, l'utilisation de charges opacifiantes telles que le TiO₂ dans les sauces de couchage traditionnelles n'est cependant pas adaptée aux procédés d'enduction traditionnels car les pigments ont tendance à s'agglomérer, ce qui génère des hétérogénéités dans le traitement de surface et entraîne des variations locales d'opacité. De plus, et du fait de sa forte abrasivité le TiO₂ entraîne une usure prématurée des dispositifs d'enduction.

Il est également connu, pour protéger, étanchéifier, colorer des supports papier, de les revêtir d'un tapis de microfibres de cellulose, MFC, ou cellulose microfibrillée (en anglais MicroFibrillated Cellulose) additionnées notamment d'un pigment. Un tel procédé est décrit dans la demande de brevet WO2011/14877. Néanmoins cette demande de brevet ne propose pas l'utilisation de ce procédé pour l'opacification d'un support papier et notamment d'un support papier fin et ne précise aucune caractéristique dimensionnelle ni pour les MFC ni pour les pigments.

Il existe donc un besoin d'une structure de couche d'opacification d'un support papier fin qui assure une opacification satisfaisante et n'entraîne pas une augmentation significative de l'épaisseur et du poids par unité de surface du papier.

### Résumé

Pour satisfaire à ce besoin et à d'autres, on propose ici d'utiliser des microfibrilles de cellulose (MFC) de dimensions submicrométriques qui seront appelées nanofibrilles de cellulose ou NFC (NanoFibrillated Cellulose). Ces nanofibrilles de cellulose ont un diamètre inférieur à 50 nm avec un facteur de forme supérieur à 30 (par exemple une longueur de l'ordre de 1 µm). Une dispersion de NFC se présente sous la forme d'un gel transparent ou semi transparent à une concentration comprise entre 2 et 4 %. Au-delà, cette dispersion aura tendance à s'agglomérer et à ne plus être homogène.

Un mode de réalisation de la présente invention prévoit une couche de revêtement d'un support comprenant un mélange de nanofibres de cellulose et de grains d'un pigment composé de particules minérales ou organiques choisies parmi les carbonates de calcium broyés ou précipités, calcite ou aragonite, et les dioxydes de titane, rutile ou anatase, ainsi que tout mélange des deux groupes, dans laquelle :
les nanofibres de cellulose ont un diamètre inférieur à 30 nm, et
un facteur de forme supérieur à 30, et au moins 50 % des grains ont une dimension inférieure à 500 nm,
la proportion massique entre les grains et les nanofibres de cellulose est située dans une plage de 10 à 50 %, et
l'épaisseur de la couche d'opacification a au minimum 3 fois le diamètre moyen des pigments opacifiants.

Selon un mode de réalisation de la présente invention, les grains de TiO₂ sont de structure rutile.

Selon un mode de réalisation, l'épaisseur de la couche d'opacification est au maximum 10 % de l'épaisseur du support à opacifier.

Un mode de réalisation de la présente invention prévoit une feuille de papier d'un grammage de 10 à 40 g/m² revêtue sur au moins une face d'une couche d'opacification telle que ci-dessus.

Selon un mode de réalisation, ladite couche a un grammage à l'état anhydre de 0,5 à 3 g/m² par face enduite.

Un mode de réalisation de la présente invention prévoit une suspension aqueuse destinée à la formation d'une couche homogène sur un support telle que ci-dessus, dans laquelle la viscosité de la suspension est comprise dans une plage de 1000 à 2000 mPa.s.

Selon un mode de réalisation de la présente invention, le pigment est dans une proportion de 10 à 50 % en poids par rapport aux nanofibres de cellulose.

Un mode de réalisation de la présente invention prévoit un procédé de préparation d'une suspension aqueuse telle que ci-dessus, comprenant les étapes successives consistant à introduire sous forte agitation mécanique et à température ambiante des nanofibres de cellulose dans un milieu aqueux, et à introduire sous forte agitation mécanique et à température ambiante des pigments, la quantité d'eau étant ajustée pour que la suspension pigmentaire ait une viscosité comprise entre 1000 et 2000 mPa.s.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 représente une cuve d'agitation contenant une suspension de NFC et de TiO₂ ; et
la figure 2 représente un support papier revêtu d'une couche d'opacification.

### Description détaillée

Les inventeurs ont cherché à obtenir une couche d'opacification sur un support papier en partant des enseignements de la demande de brevet WO 2011/14877 et ont constaté que les résultats obtenus n'étaient généralement pas satisfaisants. Les essais réalisés par les inventeurs ont montré qu'il n'était possible d'obtenir une couche d'opacification satisfaisante que si certaines conditions particulières étaient satisfaites en ce qui concerne au moins certaines des caractéristiques suivantes :
- la viscosité de la suspension de MFC pigmentaire à partir de laquelle est formée l'enduction de la couche recherchée,
- le ratio pigment/MFC dans la suspension,
- la dimension et la nature chimique des pigments,
- les propriétés morphologiques (diamètre et facteur de forme) des MFC, et/ou
- l'épaisseur du film déposé.

Ces conditions particulières vont être exposées ci-après.

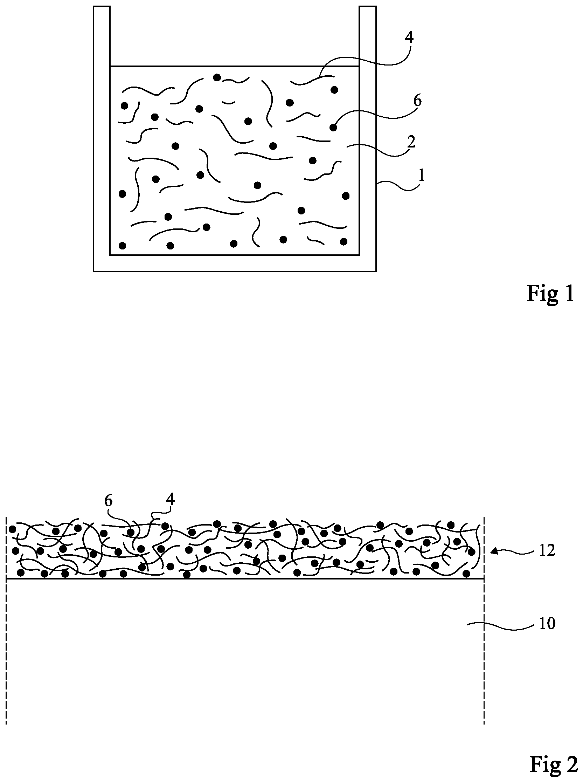

La figure 1 représente une cuve 1 contenant une suspension pigmentaire 2 comprenant un mélange de MFC 4 et de pigments 6 obtenu à partir d'un dispositif d'agitation mécanique non représenté.

La figure 2 illustre un support fibreux 10, par exemple du papier, revêtu d'une couche 12 obtenue par enduction et séchage à partir de la suspension 2.

On notera que, en figures 1 et 2, les MFC 4 et les pigments 6 sont illustrés uniquement de façon à faire comprendre la présente description mais ne sont pas représentés à l'échelle, ni en ce qui concerne leurs dimensions ni en ce qui concerne leurs proportions.

On constate, comme l'illustre très schématiquement la figure 2, que l'on obtient une dispersion très régulière des pigments fins repartis de manière homogène dans le réseau nano-fibreux de MFC si certaines conditions particulières sont respectées.

En particulier, il convient que la suspension pigmentaire présente les caractéristiques suivantes :
- le diamètre des MFC est inférieur à 50 nm (ce sont des NFC) et leur facteur de forme est supérieur à 30,
- les particules de pigments fins ont au moins 50 % de leurs diamètres inférieurs à 500 nm (d₅₀ < 500 nm), et
- la viscosité de la suspension pigmentaire se situe entre 1000 et 2000 mPa.s.

L'ordre d'introduction des deux composés joue un rôle important dans la qualité de la dispersion pigmentaire. Il est préférable d'introduire en premier lieu les NFC tout en procédant à une agitation mécanique pour fluidifier et homogénéiser la suspension aqueuse. Ensuite il convient d'introduire progressivement les pigments fins tout en maintenant l'agitation pendant au moins 5 minutes.

Le choix d'une plage de viscosité située entre 1000 et 2000 mPa.s (viscosité Brookfield mesurée à 23°C) pour la suspension pigmentaire est réalisé pour limiter la sédimentation et l'agglomération des pigments fins et permettre son pompage vers un dispositif d'enduction.

La suspension pigmentaire peut-être déposée par différentes méthodes d'enduction en milieux aqueux comme par exemple par couchage par transfert de film, couchage à lame, couchage rideau...

Bien que l'on ait décrit précédemment une couche d'opacification déposée sur une seule face du matériau, il peut être envisagé de déposer cette couche simultanément sur les deux faces.

L'utilisation d'une couche d'opacification d'un support papier telle que décrite ici présente par rapport aux procédés connus d'opacification par introduction de pigments fins comme le TiO₂ dans la masse du papier les avantages suivants :
- diminution de la quantité de TiO₂ utilisée,
- diminution de la quantité d'additifs chimiques requis dans le support de base (dispersant, agent de rétention,...),
- facilitation du traitement des eaux de recirculation (circuit primaire et secondaire) et réduction de l'impact final du TiO₂ sur le recyclage des boues et effluents.

De plus, la composition de couche proposée ici présente des avantages par rapport à une formulation de couche traditionnelle :
- agents de couchage d'origine biologique et biodégradables,
- aucun liant n'est nécessaire, les NFC permettant de remplacer le liant (amidon et latex) grâce à la création d'un réseau de nanofibrilles dans lequel est dispersé le pigment fin opacifiant,
- l'agent épaississant (dérivé issu de la pétrochimie) n'est plus nécessaire compte tenu d'un comportement rhéologique de la suspension de NFC.

Par rapport aux sauces de couchage traditionnelles, les sauces composées de NFC et de pigments dans les conditions décrites ici ont une meilleure stabilité dans le temps (pas de rétrogradation ou prise en masse de la sauce de couchage) et sont capables de supporter de larges variations de températures sans aucune altération. De plus, le stockage à froid de la sauce de couchage est possible et ce pendant une longue période et sans agitation.

De préférence, la proportion massique entre les pigments fins utilisés et les microfibres de cellulose est située dans une plage de 10 à 90 %, et c'est ce qui donne les résultats en termes d'opacification indiqués ici. De plus, les grains de TiO₂ sont de préférence de structure rutile plutôt qu'anatase pour améliorer le pouvoir opacifiant.

La couche d'opacification décrite ci-dessus peut être soumise à des traitements supplémentaires pendant le procédé de fabrication du papier ou hors ligne comme :
- un couchage additionnel,
- un traitement thermomécanique dit calandrage pour améliorer l'état de surface du papier,
- une imprégnation d'une résine (organosilane) pour obtenir ainsi un matériau laminé opaque.

### ESSAIS COMPARATIFS

### 1. Divers types de MFC

Diverses suspensions de cellulose micro- ou nano-fibrillée, appelées ici NFC, MFC, NCC et MCC, ont été essayées pour mettre en évidence l'importance de la morphologie et de la taille des nanocelluloses. Leurs caractéristiques sont données par le tableau 1 ci-dessous.

**Tableau 1**

| | NFC | MFC | NCC | MCC |
|---|---|---|---|---|
| morphologie | fibrille | fibrille | cristaux | granulaire |
| longueur | ≈0,2-3µm | ≈50µm | 100-200nm | |
| diamètre | 10nm<...<50nm | 1µm<...<300µm | 5-20nm | 9µm |
| facteur de forme | >30 | 5-10 | | |
| taux de cristallinité | 71% | | 80 % | 75% |
| concentration massique (%) | 2,7% | 3,0% | 2,5% | 9,8% |

NFC provient des termes anglo-saxons NanoFibrillated Cellulose (NanoCellulose Fibrillée). MFC provient des termes anglo-saxons MicroFibrillated Cellulose (Cellulose MicroFibrillée). NCC provient des termes anglo-saxons NanoCrystalline Cellulose (NanoCristaux de Cellulose). MCC provient des termes anglo-saxons (MicroCristaux de Cellulose).

### 2. Suspension pigmentaire

Les suspensions de nanocelluloses (NFC, MFC, NCC, MCC) ont été préalablement homogénéisées pendant 2 minutes à 6500 tr/min. Leur concentration initiale est située entre 2,5 et 3 %.

Des pigments ont été ajoutés pour réaliser des suspensions pigmentaires. Dans le cas où les pigments sont de la poudre de TiO₂ rutile (Ti-pure RPS Vantage®, DuPont®) ou anatase (TionaAT-1®, Millenium Chemicals®), on a essayé :
- des pigments "fins" c'est-à-dire des pigments dont au moins 50% ont une dimension inférieure à 500 nm, et
- des pigments "gros" obtenus par filtration de la suspension de pigments fins (toile filtrante) permettant d'éliminer les pigments les plus fins de dimension inférieure à 500 nm pour obtenir des pigments dont au moins 50 % ont une dimension comprise entre 500 nm et 1 µm.

### 3. Réalisation de films

A partir des suspensions pigmentaires, on a réalisé des films d'une épaisseur correspondant à une masse surfacique (grammage) de l'ordre de 30 g/m² avec une proportion de 90 % (massique) de nanocellulose et 10 % (massique) de pigments, par évaporation dans une étuve (50°C) pendant 4 à 5 heures. Ensuite, ces films ont été séchés à l'air libre dans une salle conditionnée (23°C, 50 % HR) pendant 12 heures.

L'homogénéité de la dispersion a été évaluée en utilisant des images réalisées par microscopie électronique à balayage (SEM, de l'anglais Scanning Electron Miscroscopy) en électrons secondaires de manière à obtenir une image avec un bon contraste entre la cellulose et les pigments minéraux. Les zones "claires" correspondent aux zones contenant des éléments minéraux (TiO₂) et les zones "sombres" correspondent à des zones contenant des éléments organiques (cellulose).

La qualité de la dispersion dans le film a été obtenue en réalisant un traitement d'image des coupes des films avec le logiciel ImageJ®. Ce logiciel a été utilisé pour évaluer l'aire et le diamètre moyen des particules et/ou agglomérats de TiO₂. A partir des images acquises, on a obtenu que, pour une poudre pigmentaire identique et une même proportion massique dans le film, plus le diamètre moyen sera proche de celui mesuré par granulométrie, plus la dispersion (à l'état sec) sera bonne et donc plus l'opacité sera homogène et élevée.

Le tableau 2 indique l'opacité du film obtenu et la qualité de la dispersion de pigments dans le film pour un mélange contenant 10 % de TiO₂ et 90 % de MFC pour divers types de MFC et divers types de pigments, la viscosité de la suspension de départ étant de 1500 mPa.s.

**Tableau 2**

| ***Essai*** | **COMPOSITION PIGMENTAIRE DU FILM** | | **Paramètres des nanocelluloses** | | | **Opacité** | **QUALITE DE LA DISPERSION** | **PRESENCE DE FIBRES MACROSCOPI QUES A LA SURFACE DU FILM** |
|---|---|---|---|---|---|---|---|---|
| | **NANOCELLULOSE (90%)** | **PIGMENT FIN (10%)** | **LONGUEUR MOYENNE** | **forme** | **FACT- EUR DE FORME** | | | |
| ***1*** | NFC | TiO2 rutile d50=0.5 | 0.2 - 3 µm | nanofibrille | >30 | 81.0+0.5 | ++ | non |
| ***2*** | NCC | TiO2 rutile d50=0.5 | 150-250 nm | nanocristal | 5-10 | 74.0+0.5 | - | non |
| ***3*** | 50% NFC-50% MFC | TiO2 rutile d50=0.5 | 0.2 - 300 µm | nano-microfibrille | 5-30 | 80.5+0.3 | + | non |
| ***4*** | MFC | TiO2 rutile d50=0.5 | 1 - 300µm | microfibrille | 10-40 | 78.5+0.3 | - | oui |
| ***5*** | MCC | TiO2 rutile d50=0.5 | 1 - 300µm | granulaire | 3-4 | - | - | non-formation du film impossible |

On constate que le meilleur résultat en termes d'homogénéité est obtenu dans le cas de l'essai 1 : NFC de facteur de forme supérieur à 30 et pigments fins. Ce résultat s'accompagne des meilleures performances en matière d'opacité du film.

On a également testé l'impact de la viscosité des suspensions pigmentaires sur la qualité du film. Les résultats en sont donnés dans le tableau 3.

**Tableau 3**

| **Essai** | **Viscosité mPa.s** | **Qualité de la dispersion dans le film** | **Opacité** | **Observations** |
|---|---|---|---|---|
| **1-0** | 2650+/-350 | ++ | 81.5±0.5 | Présence de bulles d'air |
| **1-1** | 1950+/-200 | ++ | 81.0±0.2 | OK |
| **1-2** | 1400+/-150 | ++ | 51.5±0.3 | OK |
| **1-3** | 450+/-50 | - | 80.2+0.7 | OK |
| **1-4** | 280+/-100 | - | 79.9+0.5 | OK |

Ainsi, en faisant varier la viscosité de la suspension pigmentaire et pour un même ratio de NFC/TiO2 et une masse surfacique des films identique (30 g/m²), il a été constaté expérimentalement que :
- au-delà de 2000 mPa.s, la suspension pigmentaire se présente sous la forme d'une pâte. Il a été constaté expérimentalement que l'agitation mécanique introduit des bulles d'air qui se retrouvent alors piégées dans le film et nuisent à une utilisation ultérieure du film,
- pour une faible valeur de viscosité (< 500 mPa.s), la suspension pigmentaire est très fluide, mais des images acquises au microscopique électronique ont montré qu'une partie du TiO₂ avait tendance à sédimenter, se traduisant par une plus faible opacité.

On a également testé l'impact de la nature et du polymorphisme des particules de TiO₂. Les résultats en sont donnés dans le tableau 4.

**Tableau 4**

| **Essai** | **Composition pigmentaire du film** | | | | **Opacité** | **Qualité de la dispersion** |
|---|---|---|---|---|---|---|
| | **NFC** | **TiO₂ rutile d₅₀≈0.50 µm** | **TiO₂ rutile d₅₀**≈**0.97 µm** | **TiO₂ anatase d₅₀**≈**0.50 µm** | | |
| **1** | 90 | 10 | | | 81.5+0.5 | ++ |
| **2** | 90 | 5 | 5 | | 80.8+0.1 | ++ |
| **3** | 90 | | 10 | | 80.9+0.2 | - |
| **4** | 90 | | | 10 | 80.2+0.5 | ++ |

Pour un même ratio de NFC/TiO₂, une viscosité ajustée à 1500 mPa.s, une masse surfacique identique (30 g/m²), il a été constaté expérimentalement que :
- l'opacité la plus élevée du film est atteinte avec un mélange de TiO₂ rutile ayant un d₅₀≈ 0.50µm,
- pour une dimension de particule équivalente, le TiO₂ rutile confère une meilleure opacité par rapport à l'autre forme polymorphique du TiO₂, l'anatase.

### 4. Réalisation de couches minces sur papier

Pour la suite des exemples, les grammages des couches (g/m²) correspondent à la masse de couche anhydre par unité de surface.

Des sauces de couchage ont été préparées de la même manière en respectant les ordres d'introduction suivants : pigments (i), liants (ii), et additifs (iii), sauf dans le cas des sauces contenant une proportion de NFC. Dans ce cas, les NFC ont été introduites en premier.

Les sauces de couchage ont été enduites sur du papier avec un appareil d'enduction à lame de laboratoire en faisant varier les paramètres de pression et d'épaisseur de lame qui permettent d'obtenir un poids de couche situé entre 1,5 et 2,0 g/m²/face tout en obtenant un état de surface optimal.

Les papiers enduits ont ensuite été séchés pendant trois minutes à 110°C (sécheur de laboratoire, Techpap®). Ce dispositif de séchage permet de sécher les échantillons par conduction thermique et permet d'obtenir un séchage de l'échantillon sans retrait. Après séchage, les échantillons sont immédiatement conditionnés pendant 24 heures à 23°C et 50 % d'humidité relative.

Le support de base utilisé ici est un papier issu d'une production industrielle, il n'est ni couché ni calandré et présente les caractéristiques indiquées dans le tableau 5.

**Tableau 5**

| **PROPRIETES** | | **Unité** | **Valeur** |
|---|---|---|---|
| **CONTEXTURE** | *Epaisseur* | µm | 30+2 |
| | *Volume massique* | cm³/g | 1,10+0 |
| | *Grammage* | g/m² | 27,5+0,2 |
| **COMPOSITION** | *Ratio fibres longues*/*fibres courtes* | % | 75-25 |
| | *Taux de charges* | % | 20±4 |
| **PROPRIETES OPTIQUES** | *Opacité* | % | 82,5±0,1 |
| | *Blancheur* | % | 79,3+0,3 |

Des essais ont été effectués pour des sauces ayant les formulations F1 à F7 indiquées dans le tableau 6.

**Tableau 6**

| | **FORMULATION DE LA SAUCE PIGMENTAIRE** | | | | | | | | **COMPORTEMENT RHEOLOGIQUE DES SAUCES** | | |
|---|---|---|---|---|---|---|---|---|---|---|---|
| | ***Pigments*** | | | | ***Liants*** | | | ***Addi tifs*** | | | |
| ***Formulation*** | GCC | Kaolin | TiO₂ | PCC | Latex | Amidon | NFC | Agent épaississant | Matière sèche | pH | Viscosité |
| ***F1*** | 40 | 60 | | | 7 | 15 | | 0,15 | 25,2% | 9,5 | 1250 |
| ***F2*** | | | 100 | | 7 | 15 | | 0,30 | 25,0% | 9,5 | 1150 |
| ***F3*** | | | | 100 | 7 | 15 | | 0,30 | 25,0% | 9,5 | 1250 |
| ***F4*** | | | 82 | | | | 18 | | 13,1% | 7 | >2000 |
| ***F5*** | | | 50 | | | | 50 | | 5,2% | 7 | >2000 |
| ***F6*** | | | 10 | | | | 90 | | 2,9% | 7 | >2000 |
| ***F7*** | | | | 82 | | | 18 | | 8,4% | 7 | >2000 |

Des essais plus détaillés ont été faits pour des suspensions de NFC et de TiO₂ et des suspensions de mélange de liants et d'additif et de TiO₂, en faisant varier les pourcentages de TiO₂. Les résultats en sont donnés dans les tableaux 7 et 8.

**Tableau 7**

| **Essai** | **Composition** | | **Opacité** |
|---|---|---|---|
| | **NFC** | **TiO₂** | |
| **1** | 90 | 10 | 83.1±0.5 |
| **2** | 80 | 20 | 84.5+0.5 |
| **3** | 70 | 30 | 85.0+0.5 |
| **4** | 60 | 40 | 85.0+0.2 |
| **5** | 50 | 50 | 85.8+0.9 |
| **6** | 30 | 70 | 85.6+0.2 |
| **7** | 20 | 80 | 85.8±0.1 |

**Tableau 8**

| **Essai** | **Composition** | | **Opacité** |
|---|---|---|---|
| | **Liant & additifs** | **TiO₂** | |
| **C1** | 90 | 10 | 82.2+0.8 |
| **C2** | 80 | 20 | 83.1±0.1 |
| **C3** | 70 | 30 | 83.0+0.6 |
| **C4** | 60 | 40 | 83.5+0.4 |
| **C5** | 50 | 50 | 83.5±0.1 |
| **C6** | 30 | 70 | 83.2±0.0 |
| **C7** | 20 | 80 | 83.4±0.3 |

Le tableau 7 montre qu'avec une suspension de NFC et de TiO₂ dont la proportion de TiO₂ est supérieure à 50 %, on obtient une opacité sensiblement constante, supérieure à 85,5 %, valeur qui ne peut pas être obtenue avec des mélanges classiques de dispersants et de liants.

Le tableau 9 présente les résultats (blancheur et opacité tels que définies par la norme ISO) obtenus sur une feuille de papier telle que définie au tableau 5 avec les différentes sauces d'enduction F1 à F7 définies au tableau 6, pour un grammage déposé compris entre 1,5 et 2,0 g/m² :

**Tableau 9**

| ***Formulation*** | **GRAMMAGE DEPOSE (G/M²)** | **OPACITE** | **BLANCHEUR** |
|---|---|---|---|
| ***F1*** | 2,0±0,1 | 82,6±0,*3* | 77,3 |
| ***F2*** | 1,7±0,4 | 83,4±*1,2* | 78,2 |
| ***F3*** | 1,8+0,4 | 82,8±*0,5* | 77,9 |
| ***F4*** | 2,1±0,4 | 85,8±*0,5* | 80,5 |
| ***F5*** | 1,5+0,4 | 84,5±*0,5* | 78,2 |
| ***F6*** | 1,7±0,4 | 83,1±*0,5* | 77,2 |
| ***F7*** | 1,6+0,4 | 82,2+*0,5* | 77,6 |

Pour une couche de formulation F1 classiquement utilisée pour l'impression offset des papiers minces, le niveau d'opacité est de 82,6 pour une blancheur de 77,3 pour 2,0 g/m².

En remplaçant, le couple pigmentaire Kaolin-GCC par le TiO₂ (formulation F2), le gain est de 1 % et 1,2 % pour l'opacité et la blancheur, respectivement. Cependant la sauce de couchage n'est pas adaptée à un couchage classique. En effet, un phénomène d'agglomération du TiO₂ a été constaté. L'agglomération du TiO₂ se traduit par un état de surface hétérogène et d'importantes variations d'opacité (cf. écart-type).

En remplaçant, le couple pigmentaire Kaolin-GCC par le PCC (formulation F3) le gain d'opacité est de 0,2% et 0,8% pour l'opacité et la blancheur respectivement.

Les couches de formulation F4, F5, F6 sont les formulations pigmentaires comprenant un mélange de NFC et de TiO₂ avec différents ratios de TiO₂ et NFC. Le gain d'opacité par rapport à une formulation contenant le même pourcentage de TiO₂ (voir formulations F4 et F2) est de 3,0 % pour l'opacité et la blancheur.

Pour un pourcentage de TiO₂ (formulation F5) 33 % plus faible par rapport à la formulation F2, une augmentation de l'opacité de près de 1 % a été constatée.

Pour un pourcentage de TiO₂ de près de 83 % plus faible par rapport à la formulation F2, un niveau équivalent d'opacité a été constaté.

Un niveau équivalent d'opacité a été constaté pour une couche NFC-PCC (formulation F7) par rapport à une couche classique contenant la même proportion de TiO₂.

Des tests complémentaires de rigidité à la flexion et d'imprimabilité ont montré qu'il n'y avait aucun impact (amélioration/dégradation) sur ces deux propriétés essentielles pour les papiers minces destinés à être imprimés en offset.

Bien que les exemples donnés ci-dessus l'aient été essentiellement dans le domaine de la papeterie dans le cas où on cherche à conférer à un papier un aspect opaque et dans le cas où le pigment est du TiO₂, l'homme de l'art notera que l'invention s'applique de façon générale au cas où l'on souhaite déposer sur un support une couche comprenant une répartition homogène de pigments ou autre charge. Il faut alors utiliser les relations dimensionnelles indiquées ici, tant pour les MFC (NFC) que pour les charges.

## Revendications

1. Couche d'opacification d'un support comprenant un mélange de nanofibres de cellulose et de grains d'un pigment composé de particules minérales ou organiques choisies parmi les carbonates de calcium broyés ou précipités, calcite ou aragonite, et les dioxydes de titane, rutile ou anatase, ainsi que tout mélange des deux groupes, dans laquelle :
les nanofibres de cellulose ont un diamètre inférieur à 30 nm et un facteur de forme supérieur à 30, et
au moins 50 % des grains ont une dimension inférieure à 500 nm,
la proportion massique entre les grains et les nanofibres de cellulose est située dans une plage de 10 à 50 %, et
l'épaisseur de la couche d'opacification a au minimum 3 fois le diamètre moyen des pigments opacifiants.

2. Couche d'opacification selon la revendication 1, dans laquelle les grains de pigment sont des grains de TiO₂ de structure rutile.

3. Couche d'opacification selon la revendication 1 ou 2, dans laquelle l'épaisseur de la couche d'opacification est au maximum égale à 10 % de l'épaisseur du support à opacifier.

4. Feuille de papier d'un grammage de 10 à 40 g/m² revêtue sur au moins une face d'une couche d'opacification selon l'une quelconque des revendications 1 à 3.

5. Feuille de papier selon la revendication 4, dans laquelle ladite couche a un grammage à l'état anhydre de 0,5 à 3 g/m² par face enduite.

6. Suspension aqueuse destinée à la formation d'une couche homogène sur un support selon l'une quelconque des revendications 1 à 5, dans laquelle la viscosité de la suspension est comprise dans une plage de 1000 à 2000 mPa.s.

7. Suspension selon la revendication 6, dans laquelle le pigment est dans une proportion de 10 à 50 % en poids par rapport aux nanofibres de cellulose.

8. Procédé de préparation d'une suspension aqueuse selon la revendication 6 ou 7, comprenant les étapes successives suivantes :
introduire sous forte agitation mécanique et à température ambiante des nanofibres de cellulose dans un milieu aqueux, et
introduire sous forte agitation mécanique et à température ambiante des pigments,
la quantité d'eau étant ajustée pour que la suspension pigmentaire ait une viscosité comprise entre 1000 et 2000 mPa.s.

## Patentansprüche

1. Schicht zum Trüben eines Trägers, umfassend ein Gemisch aus Zellulose-Nanofasern und aus Körnchen eines Pigments, das aus anorganischen oder organischen Partikeln zusammengesetzt ist, ausgewählt aus zermahlenen oder ausgefällten Calciumcarbonaten, Calcit oder Aragonit, und Titan-, Rutil- oder Anatas-Dioxiden, sowie jedem Gemisch der zwei Gruppen, wobei:
die Zellulose-Nanofasern einen Durchmesser von kleiner als 30 nm und einen Formfaktor von größer als 30 aufweisen, und
mindestens 50 % der Körnchen eine Abmessung von kleiner als 500 nm aufweisen,
das Massenverhältnis zwischen den Körnchen und den Zellulose-Nanofasern in einem Bereich von 10 bis 50 % liegt, und
die Dicke der Trübungsschicht mindestens das 3-Fache des mittleren Durchmessers der Trübungspigmente aufweist.

2. Trübungsschicht nach Anspruch 1, wobei die Pigmentkörnchen TiO₂-Körnchen von Rutilstruktur sind.

3. Trübungsschicht nach Anspruch 1 oder 2, wobei die Dicke der Trübungsschicht höchstens gleich 10 % der Dicke des Trägers beträgt, der getrübt werden soll.

4. Blatt Papier einer Grammatur von 10 bis 40 g/m², das auf mindestens einer Seite mit einer Trübungsschicht nach einem der Ansprüche 1 bis 3 überzogen ist.

5. Blatt Papier nach Anspruch 4, wobei die Schicht im wasserfreien Zustand eine Grammatur von 0,5 bis 3 g/m² pro beschichteter Seite aufweist.

6. Wässrige Suspension, die zur Bildung einer homogenen Schicht auf einem Träger nach einem der Ansprüche 1 bis 5 vorgesehen ist, wobei die Viskosität der Suspension in einem Bereich von 1000 bis 2000 mPA.s umfasst ist.

7. Suspension nach Anspruch 6, wobei das Pigment in einem Verhältnis von 10 bis 50 Gewichts-% bezogen auf die Zellulose-Nanofasern vorliegt.

8. Verfahren zur Herstellung einer wässrigen Suspension nach Anspruch 6 oder 7, umfassend die folgenden aufeinanderfolgenden Schritte:
Einbringen der Zellulose-Nanofasern unter starkem mechanischem Rühren und bei Umgebungstemperatur in ein wässriges Medium, und
Einbringen der Pigmente unter starkem mechanischem Rühren und bei Umgebungstemperatur,
wobei die Wassermenge so angepasst wird, dass die Pigmentsuspension eine Viskosität im Bereich zwischen 1000 und 2000 mPa.s aufweist.

## Claims

1. Layer for opacifying a support comprising a mixture of cellulose nanofibers and grains of a pigment composed of inorganic or organic particles chosen from ground or precipitated calcium carbonates, calcite or aragonite, and the dioxides of titanium, rutile or anatase, as well as any mixture of the two groups, wherein:
the cellulose nanofibers have a diameter of less than 30nm and a shape factor greater than 30, and
at least 50% of the grains have a dimension smaller than 500nm,
the weight proportion between the grains and the cellulose nanofibers is in a range of 10 to 50%, and
the thickness of the opacifying layer has at least 3 times the average diameter of the opacifying pigments.

2. Opacifying layer according to claim 1, wherein the grains of pigment are grains of TiO₂ having a rutile structure.

3. Opacifying layer according to claim 1 or 2, wherein the thickness of the opacifying layer is at most equal to 10% of the thickness of the support to be opacified.

4. Sheet of paper having a grammage of 10 to 40g/m² and coated on at least one face with an opacifying layer according to any one of claims 1 to 3.

5. Sheet of paper according to claim 4, wherein said layer has a grammage in the anhydrous state of 0.5 to 3g/m² per coated face.

6. Aqueous suspension intended for the formation of a homogenous layer on a support according to any one of claims 1 to 5, wherein the viscosity of the suspension is in a range of 1000 to 2000mPa.s.

7. Suspension according to claim 6, wherein the pigment has a proportion of 10 to 50% by weight with respect to the cellulose nanofibers.

8. Method for preparing an aqueous suspension according to claim 6 or 7, comprising the following successive steps:
introducing cellulose nanofibers into an aqueous medium with strong mechanical stirring and at ambient temperature, and
introducing pigments with strong mechanical stirring and at ambient temperature,
the quantity of water being adjusted in order for the pigment suspension to have a viscosity between 1000 and 2000mPa.s.
